# EUROPEAN PATENT APPLICATION

(11) **EP 4 391 333 A1**
(43) Date of publication of application: **26.06.2024**
(21) Application number: 22858298.7
(22) Date of filing: 02.08.2022
(51) Int. Cl.: H02K 49/10, F16D 7/02, F16H 49/00

(54) **METHOD FOR MANUFACTURING MAGNETIC MODULATOR, MAGNETIC MODULATOR, AND MAGNETIC MODULATION GEAR**

(30) Priority: 20.08.2021 JP 2021134793
(71) Applicant: Sumitomo Heavy Industries, Ltd., Tokyo 141-6025 (JP)
(72) Inventor: MINARI, Takahiro, Yokosuka-shi, Kanagawa 237-8555 (JP); YAMAMOTO, Taizo, Yokosuka-shi, Kanagawa 237-8555 (JP); NAKAGAWA, Hiroki, Yokosuka-shi, Kanagawa 237-8555 (JP)
(74) Representative: Louis Pöhlau Lohrentz
(86) International application number: PCT/JP2022/029586
(87) International publication number: WO 2023/021977

(57) **Abstract**

A method for manufacturing a magnetic modulator 50 that includes a magnetic pole piece member 54 having a plurality of magnetic pole pieces 54a arranged in a circumferential direction and a bridge portion 54b connecting adjacent magnetic pole pieces 54a to each other in the circumferential direction, and an output shaft portion 51, the method including: a process of manufacturing the magnetic pole piece member 54 by axially laminating electromagnetic steel sheets each having the plurality of magnetic pole pieces 54a and the bridge portions 54b; a processing of performing resin molding to integrate the magnetic pole piece member 54 and the output shaft portion 51 with resin; and a processing of performing removal processing on at least one of an inner peripheral surface and an outer peripheral surface of the magnetic pole piece member 54.

## Description

### Technical Field

The present invention relates to a method for manufacturing a magnetic modulator, a magnetic modulator, and a magnetic modulation gear.

### Background Art

In the related art, a magnetic modulation gear is known in which a magnetic pole piece member having a plurality of magnetic pole pieces is disposed between two magnetic rotors disposed on inner and outer peripheries to modulate a magnetic flux distribution between the two magnetic rotors.

In the magnetic modulation gear described in PTL 1, a magnetic pole piece (magnetic body) and a non-magnetic body are arranged alternately in a circumferential direction and are sandwiched from both ends in an axial direction by using a shaft member (output shaft), whereby a magnetic pole piece member and the shaft member are fixed to each other.

### Citation List

### Patent Literature

[PTL 1] Japanese Patent No. 5350438

### Summary of Invention

### Technical Problem

However, in a state where a plurality of magnetic pole pieces and a shaft member are simply assembled, there is a concern that sufficient shape accuracy may not be obtained for a peripheral surface of the magnetic pole piece member and eventually, suitable output performance may not be obtained.

The present invention has been made in view of the above circumstances, and an object of the present invention is to obtain suitable output performance.

### Solution to Problem

According to the present invention, there is provided a method for manufacturing a magnetic modulator that includes a magnetic pole piece member having a plurality of magnetic pole pieces arranged in a circumferential direction and a connection portion connecting adjacent magnetic pole pieces to each other in the circumferential direction, and a shaft member, the method including:
a first process of manufacturing the magnetic pole piece member by axially laminating electromagnetic steel sheets each having the plurality of magnetic pole pieces and the connection portions;
a second process of performing resin molding to integrate the magnetic pole piece member and the shaft member with resin; and.
a third process of performing removal processing on at least one of an inner peripheral surface and an outer peripheral surface of the magnetic pole piece member.

Further, according to the present invention, there is provided a magnetic modulator including:
a magnetic pole piece member made by axially laminating electromagnetic steel sheets each having a plurality of magnetic pole pieces arranged in a circumferential direction and a connection portion connecting adjacent magnetic pole pieces to each other in the circumferential direction; and
a shaft member,
in which at least one of an inner peripheral surface and an outer peripheral surface of the magnetic pole piece member has circularity of 10 um or less and coaxiality with the shaft member of 5 um or less.

Further, according to the present invention, there is provided a magnetic modulation gear including:
a magnetic modulator manufactured by the above-described method for manufacturing a magnetic modulator, or the above-described magnetic modulator;
an input shaft having a plurality of inner pole magnets disposed on an inner diameter side of the magnetic pole piece member and arranged in a circumferential direction; and
a plurality of outer pole magnets disposed on an outer diameter side of the magnetic pole piece member and arranged in the circumferential direction.

### Advantageous Effects of Invention

According to the present invention, it is possible to obtain suitable output performance.

### Brief Description of Drawings

Fig. 1 is a sectional view of a magnetic modulation gear according to an embodiment.
Fig. 2 is a sectional view of a magnetic modulator according to an embodiment.
Fig. 3 is a perspective view of a magnetic pole piece member according to an embodiment.
Fig. 4 is a flowchart showing a schematic manufacturing process of the magnetic modulator.
Fig. 5 is a diagram for explaining a difference in a state of the magnetic modulator (magnetic pole piece member) according to the presence or absence of the finishing processing of step S5 in Fig. 4.
Fig. 6A is a diagram showing an example of an effect in a case of performing the finishing processing of step S5 in Fig. 4, and is a diagram showing a loss during power conversion.
Fig. 6B is a diagram showing an example of an effect in a case of performing the finishing processing of step S5 in Fig. 4, and is a diagram showing a torque ripple.
Fig. 7 is a cross-sectional view schematically showing a magnetic modulation part according to an embodiment.
Fig. 8 is a sectional view showing a modification example of the magnetic modulation gear according to the embodiment.

### Description of Embodiments

Hereinafter, an embodiment of the present invention will be described in detail with reference to the drawings.

### [Configuration of Magnetic Modulation Gear]

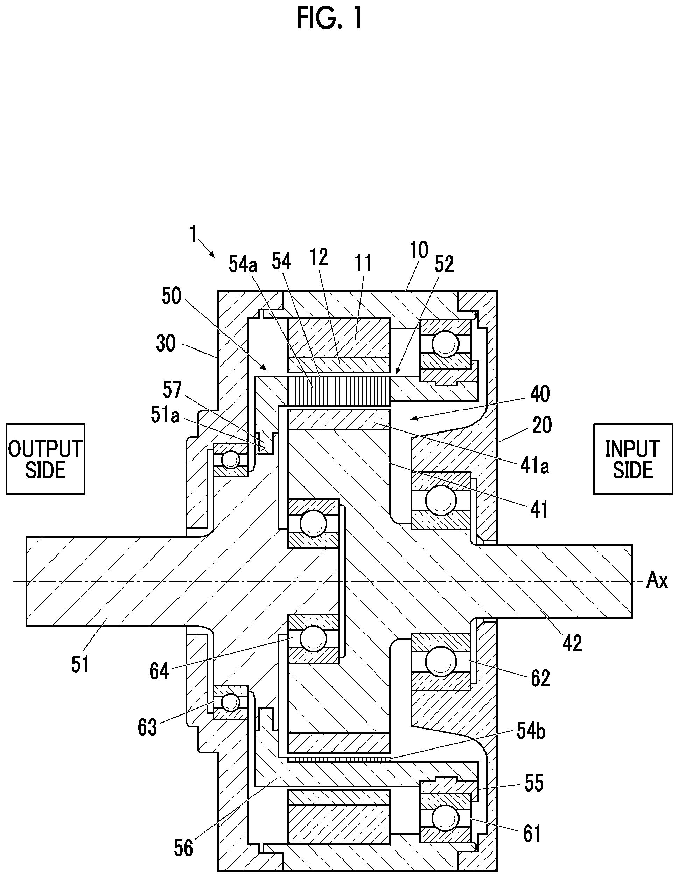

Fig. 1 is a sectional view of a magnetic modulation gear 1 according to the present embodiment.

In the following description, the direction along a center axis Ax of the magnetic modulation gear 1 will be referred to as an "axial direction", the direction perpendicular to the center axis Ax will be referred to as a "radial direction", and the direction of rotation around the center axis Ax will be referred to as a "circumferential direction". Further, in the axial direction, the side (the left side in the drawing) that is connected to an external driven member will be referred to as an "output side", and the side (the right side in the drawing) opposite to the above side will be referred to as an "input side".

As shown in Fig. 1, the magnetic modulation gear 1 according to the present embodiment includes a casing (a frame) 10, an input-side cover 20 and an output-side cover 30 that cover both sides in an axial direction of the casing 10, and an input shaft 40 and a magnetic modulator 50 whose main portions are accommodated inside the covers.

The casing 10 is formed in a substantially cylindrical shape centered on the center axis Ax, and includes a stator yoke 11 and an outer pole magnet 12 on an inner peripheral portion thereof.

The stator yoke 11 is formed in a cylindrical shape and is fitted inside the casing 10.

The outer pole magnet 12 has a larger number of poles than inner pole magnets 41a of the input shaft 40, which will be described later, and is attached to an inner peripheral surface of the stator yoke 11 such that a plurality of outer pole magnets having different polarities are disposed alternately in the circumferential direction. However, the outer pole magnet 12 may be in the form of an integral ring, or may be divided into pieces arranged in the circumferential direction.

Further, a bearing 61 (for example, a ball bearing) that rotatably supports the magnetic modulator 50 is disposed on the input side with respect to the stator yoke 11 in the inner peripheral portion of the casing 10.

The input-side cover 20 is disposed on the input side of the casing 10 and covers an inner opening of the casing 10 from the input side. An outer peripheral portion of the input-side cover 20 is spigot-fitted to the casing 10. Further, a bearing 62 (for example, a ball bearing) that rotatably supports the input shaft 40 is disposed on an inner peripheral portion of the input-side cover 20.

The output-side cover 30 is disposed on the output side of the casing 10 and covers an inner opening of the casing 10 from the output side. An outer peripheral portion of the output-side cover 30 is spigot-fitted to the casing 10. Further, a bearing 63 (for example, a ball bearing) that rotatably supports the magnetic modulator 50 is disposed on an inner peripheral portion of the output-side cover 30.

The input shaft 40 is a shaft that rotates around the center axis Ax, and includes a disk portion 41 and a motor connection portion 42. The input shaft 40 is rotatably supported by the bearing 62 disposed between itself and the input-side cover 20, and a bearing 64 disposed between itself and the magnetic modulator 50.

The disk portion 41 has, at an outer peripheral portion thereof, the inner pole magnet 41a disposed on an inner diameter side of the outer pole magnet 12. The inner pole magnet 41a is, for example, a permanent magnet such as a neodymium magnet, and is attached to an outer peripheral surface of the disk portion 41 such that a plurality of inner pole magnets with different polarities are disposed alternately in the circumferential direction. However, the inner pole magnet 41a may be in the form of an integral ring, or may be divided into pieces arranged in the circumferential direction.

The motor connection portion 42 extends from the disk portion 41 toward the input side in the axial direction. A tip end side of the motor connection portion 42 protrudes outward from the input-side cover 20, and this protrusion portion is connected to a motor (not shown).

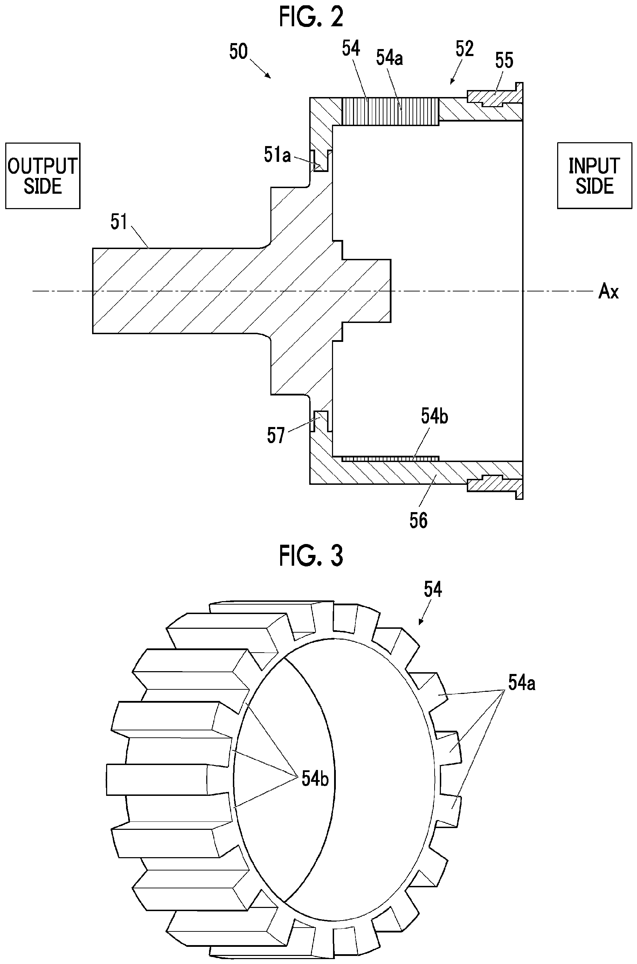

Fig. 2 is a sectional view of the magnetic modulator 50.

As shown in Figs. 1 and 2, the magnetic modulator 50 includes an output shaft portion 51 and a cylindrical portion 52.

The output shaft portion 51 is an example of a shaft member according to the present invention, and is a metal shaft that rotates around the center axis Ax. A substantially half on the output side of the output shaft portion 51 protrudes outward from the output-side cover 30, and this protrusion portion is connected to a driven member (not shown).

A substantially central portion in the axial direction of the output shaft portion 51 is rotatably supported by the bearing 63 disposed between the output shaft portion 51 and the output-side cover 30. Further, the bearing 64 (for example, a ball bearing) that rotatably supports the input shaft 40 is disposed at an end portion on the input side of the output shaft portion 51. An end portion on the output side of the cylindrical portion 52 is connected to an outer peripheral portion of the output shaft portion 51 at an axial position between the bearing 63 and the bearing 64.

The cylindrical portion 52 is formed in a substantially cylindrical shape centered on the center axis Ax, and has a magnetic pole piece member 54 disposed at an axial position corresponding to the outer pole magnet 12 and the inner pole magnet 41a.

Fig. 3 is a perspective view of the magnetic pole piece member 54.

As shown in this drawing, the magnetic pole piece member 54 is formed in a substantially annular shape having a plurality of magnetic pole pieces 54a disposed at predetermined intervals in the circumferential direction and a plurality of bridge portions 54b each connecting adjacent magnetic pole pieces 54a in the circumferential direction. The magnetic pole piece member 54 is composed of electromagnetic steel sheets (laminated steel sheets) in which the magnetic pole pieces 54a and the bridge portions 54b are integrally laminated in the axial direction.

The magnetic pole piece 54a is concentrically disposed between the inner diameter side of the outer pole magnet 12 and the outer diameter side of the inner pole magnet 41a with a predetermined gap from each of the inner diameter side of the outer pole magnet 12 and the outer diameter side of the inner pole magnet 41a. The number of magnetic pole pieces 54a is (the number of outer pole pairs ± the number of inner pole pairs), and generally is (the number of outer pole pairs - the number of inner pole pairs). The number of outer pole pairs is the number of pole pairs of the outer pole magnet 12, and the number of inner pole pairs is the number of pole pairs of the inner pole magnet 41a.

The bridge portion 54b has a predetermined radial width smaller than that of the magnetic pole piece 54a, and connects the magnetic pole pieces 54a adjacent to each other in the circumferential direction.

In the present embodiment, the bridge portion 54b is located at an innermost diameter of the magnetic pole piece member 54. That is, an inner peripheral surface of the magnetic pole piece 54a and an inner peripheral surface of the bridge portion 54b are substantially flush with each other, and the inner peripheral surface of the magnetic pole piece member 54 forms a cylindrical surface.

In this manner, especially from the viewpoint of processing and manufacturing, for the following reasons, it is preferable that the inner peripheral surface of the magnetic pole piece member 54 is formed into a cylindrical surface with substantially no unevenness. First, it becomes easier to fit a jig (for machining, resin molding, or the like) onto the inner peripheral surface. Further, since centering (reference setting) is easier on the inner peripheral surface, it is easier to finish each part with high shape accuracy (coaxiality, cylindricity, orthogonality, or the like). Further, since no resin mold is required on the inner peripheral surface, there is no need to take measures against resin leakage from the inner peripheral portion during resin molding.

The radial position of the bridge portion 54b is not particularly limited. However, the bridge portion 54b is disposed on the inner diameter side, so that output torque can be increased and a torque ripple can be reduced. Further, a recessed portion of the magnetic pole piece member 54 corresponding to the bridge portion 54b is filled with resin, and during resin molding, a load in the circumferential direction is applied to the bridge portion 54b due to contraction of the resin. This load is a compressive load in a case where the bridge portion 54b is located on the inner diameter side. However, the load becomes a tensile load in a case where the bridge portion 54b is located on the outer diameter side. Therefore, in terms of intensity design at the time of resin molding, it is preferable that the bridge portion 54b is located on the inner diameter side.

As shown in Fig. 2, a bearing support ring 55 made of metal (for example, stainless steel) is disposed at an end portion on the input side of the cylindrical portion 52. The bearing support ring 55 is fixed to an outer peripheral portion of the cylindrical portion 52, and an inner ring of the bearing 61 disposed between the bearing support ring 55 and the casing 10 is fitted onto the outer peripheral surface of the bearing support ring 55 (refer to Fig. 1).

A portion of the cylindrical portion 52 excluding the magnetic pole piece member 54 and the bearing support ring 55 is a resin portion 56 made of resin (for example, super engineering plastic). A recessed portion on the peripheral surface of the magnetic pole piece member 54 corresponding to the bridge portion 54b is also filled with resin, and this resin and the magnetic pole piece 54a are flush with each other.

An end portion on the output side of the resin portion 56 protrudes toward the inner diameter side and is connected to the output shaft portion 51. A plurality of protrusions 57 protruding toward the inner diameter side are arranged in the circumferential direction at an inner peripheral portion of this end portion. The plurality of protrusions 57 are molded to correspond to a plurality of recessed portions 51a on the outer peripheral surface of the output shaft portion 51, and due to the engagement between the protrusions 57 and the recessed portions 51a, the output shaft portion 51 and the cylindrical portion 52 (the resin portion 56) are firmly fixed to each other, and mutual movement in the radial direction and the axial direction is suppressed.

### [Manufacturing Process of Magnetic Modulator]

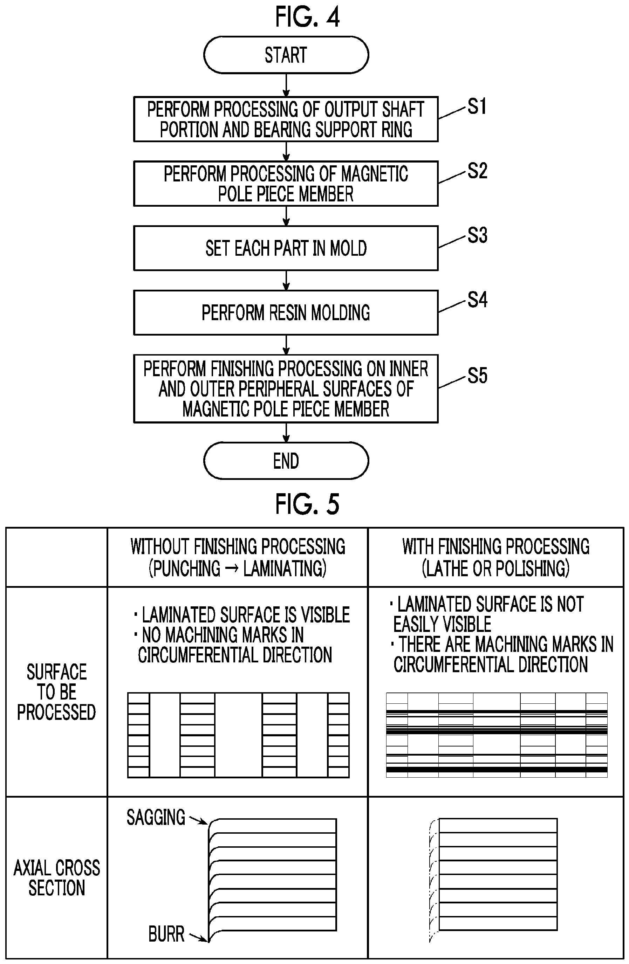

Fig. 4 is a flowchart showing a schematic manufacturing process of the magnetic modulator 50.

As shown in this drawing, in the manufacturing process of the magnetic modulator 50, first, processing of the output shaft portion 51 and the bearing support ring 55 is performed (step S1). Here, both the output shaft portion 51 and the bearing support ring 55 are subjected to machining or the like (including required treatments such as heat treatment or surface treatment, in addition to machining) to a predetermined completed shape.

Next, processing of the magnetic pole piece member 54 is performed (step S2). Here, one (or a plurality of) electromagnetic steel sheets are punched out into a planar shape of the magnetic pole piece member 54 having the magnetic pole pieces 54a and the bridge portions 54b, and then the magnetic pole piece member 54 is manufactured by laminating the punched steel sheets by a predetermined axial length. The magnetic pole piece member 54 may be manufactured by wire cutting or other methods instead of punching.

Next, the output shaft portion 51, the bearing support ring 55, and the magnetic pole piece member 54 manufactured in steps S1 and S2 are disposed in a forming mold for molding the resin portion 56 (step S3).

Then, the forming mold is filled with resin, and molding (resin casting, injection molding, or the like) of the resin portion 56 is performed (step S4). In this way, the resin portion 56 is molded, and the output shaft portion 51, the bearing support ring 55, and the magnetic pole piece member 54 are fixed (integrated) to each other by the resin portion 56 with required positional accuracy.

Next, both the inner peripheral surface and the outer peripheral surface of the magnetic pole piece member 54 are subjected to finishing processing (step S5). Here, the inner peripheral surface and outer peripheral surface of the magnetic pole piece member 54 are processed to a predetermined shape accuracy or the like by machining (cutting or polishing) using a lathe or a polishing machine. In this way, the centering accuracy of the inner peripheral surface or the outer peripheral surface is improved, and a loss or a torque ripple during an operation is improved.

In this step, at least one of the inner peripheral surface and the outer peripheral surface of the magnetic pole piece member 54 may be subjected to removal processing. This removal processing is not limited to machining using a lathe or a polishing machine, but includes, for example, manual polishing or the like. Further, processing of portions other than the peripheral surface may also be performed.

Further, in a case where the finishing processing is performed, it is preferable that the surface to be processed (at least one of the inner peripheral surface and the outer peripheral surface of the magnetic pole piece member 54) has at least one of circularity equal to or higher than a predetermined value and coaxiality with the output shaft portion 51 equal to or higher than a predetermined value. More specifically, it is more preferable that the surface to be processed has circularity of 10 um or less and coaxiality with the output shaft portion 51 (the connection portion with a driven member) of 5 um or less.

Fig. 5 is a diagram for explaining a difference in the state of the magnetic modulator 50 (the magnetic pole piece member 54) according to the presence or absence of the finishing processing of step S5.

As shown in this drawing, in a case where the finishing processing is not performed, a laminated surface of the electromagnetic steel sheet is relatively clearly visible on the surface to be processed (at least one of the inner peripheral surface and the outer peripheral surface of the magnetic pole piece member 54), and there is no machining mark in the circumferential direction. On the other hand, in a case where the finishing processing using a lathe or a polishing machine is performed, the laminated surface is hard to be seen on the surface to be processed, and machining marks along the circumferential direction are formed. However, depending on the processing conditions, the machining marks may become so fine that they cannot be visibly observed.

Further, in a case where the finishing processing is not performed, sagging or burrs formed during punching of the electromagnetic steel sheet remain on the surface to be processed of the magnetic pole piece member 54. On the other hand, in a case where the finishing processing is performed, sagging surfaces or burrs are removed from the surface to be processed.

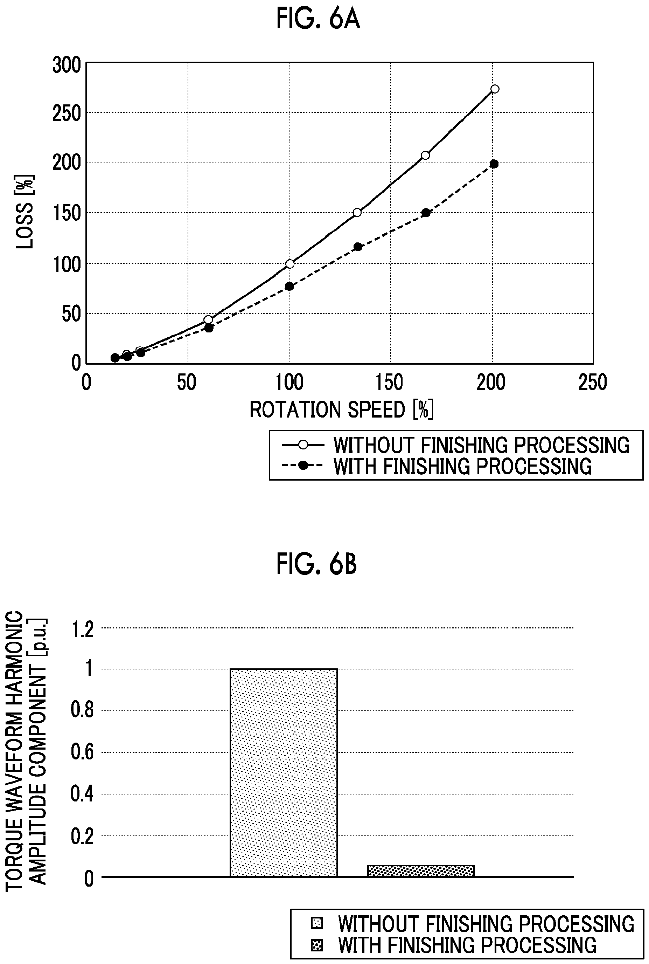

Figs. 6A and 6B are diagrams showing an example of an effect in a case of performing the finishing processing of step S5, and specifically, are diagrams showing a loss and a torque ripple (harmonic amplitude component of a torque waveform) during power conversion when input (motor output) to the input shaft 40 is about 200 W. Further, these drawings show a case where removal processing is performed on only the inner peripheral surface of the cylindrical portion 52 (the magnetic pole piece member 54).

As shown in Figs. 6A and 6B, in a case where the inner peripheral surface of the magnetic pole piece member 54 is subjected to removal processing, the centering accuracy of the inner peripheral surface is improved compared to a case where the removal processing is not performed, and thus a loss or a torque ripple during power conversion is improved,

Further, it is considered that even in a case where the outer peripheral surface of the cylindrical portion 52 (the magnetic pole piece member 54) is processed, the same effect can be obtained and in a case where both the inner peripheral surface and the outer peripheral surface are processed, higher effect can be obtained. However, regarding the torque ripple, since a magnetic field state on the inner periphery side has a greater influence than on the outer periphery side, it is considered that an effect is higher in a case of processing the inner peripheral surface than in a case of processing the outer peripheral surface.

### [Operation of Magnetic Modulation Gear]

Subsequently, the operation of the magnetic modulation gear 1 will be briefly described.

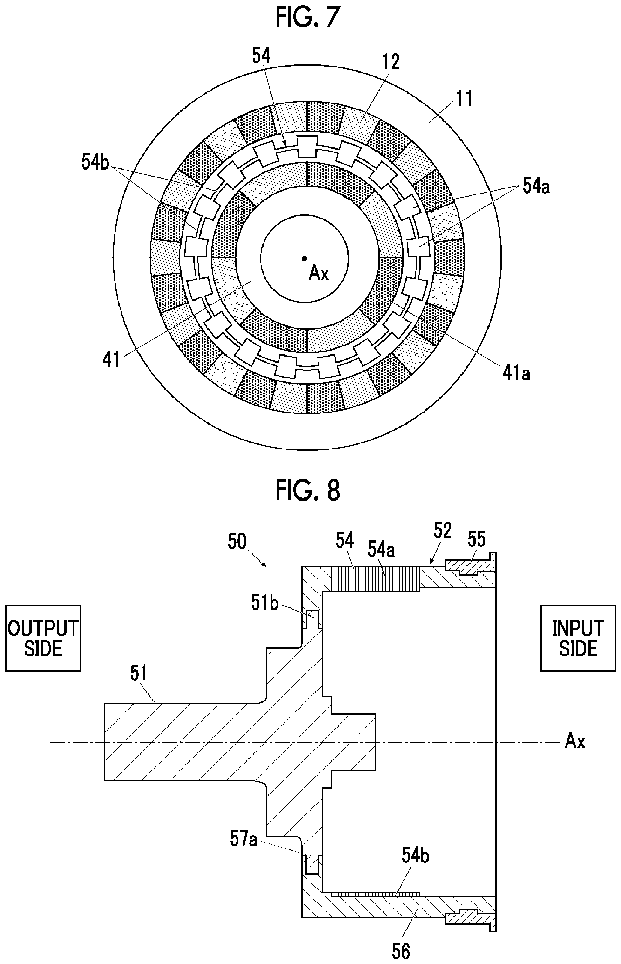

Fig. 7 is a cross-sectional view schematically showing a magnetic modulation part that includes the inner pole magnet 41a, the outer pole magnet 12, and the magnetic pole piece 54a.

As shown in Figs. 1 and 7, in the magnetic modulation gear 1, when the input shaft 40 is rotated around the center axis Ax by a motor (not shown), the spatial magnetic flux waveform of the inner pole magnet 41a of the input shaft 40 is modified to the same frequency as the outer pole magnet 12 by the magnetic pole piece 54a of the magnetic modulator 50, and rotation torque is transmitted to the magnetic modulator 50 by using the magnetic force between the magnetic pole piece 54a and the outer pole magnet 12. At this time, the reduction ratio is the number of magnetic pole pieces 54a/the number of inner pole magnet pole pairs.

In this way, the rotary motion decelerated in the magnetic modulation part is output to a driven member (not shown) connected to the output shaft portion 51 of the magnetic modulator 50.

At this time, in the magnetic modulation gear 1, at least one of the inner peripheral surface and the outer peripheral surface of the magnetic modulator 50 (the magnetic pole piece member 54) is subjected to removal processing. Therefore, the centering accuracy of the processed peripheral surface is improved compared to a case where the plurality of magnetic pole pieces 54a and the output shaft portion 51 are simply assembled. Eventually, a loss or a torque ripple during power conversion is improved, and vibration or noise is also reduced.

### [Technical Effect of the Present Embodiment]

As described above, according to the present embodiment, at least one of the inner peripheral surface and the outer peripheral surface of the magnetic pole piece member 54 is subjected to removal processing.

In this way, the centering accuracy of the processed peripheral surface is improved compared to a case where the plurality of magnetic pole pieces 54a and the output shaft portion 51 are simply assembled, and a loss or a torque ripple during power conversion is improved. Therefore, suitable output performance can be obtained.

Further, according to the present embodiment, in the molding process of step S4, the recessed portion of the peripheral surface of the magnetic pole piece member 54 is filled with resin, so that the resin portion 56 is molded.

Since the recessed portion of the magnetic pole piece member 54 is filled with resin in this manner, intensity (especially intensity against torsion) is improved compared to the related art in which a rotation force is received only by the magnetic pole piece member.

### [Other]

Although the embodiment of the present invention has been described above, the present invention is not limited to the above embodiment.

For example, in the embodiment described above, in step S5 of the manufacturing process of the magnetic modulator 50, either the inner peripheral surface or the outer peripheral surface of the magnetic pole piece member 54 is subjected to finishing processing. However, in this step S5, a part or the whole of the bridge portion 54b connecting the magnetic pole pieces 54a may be removed by processing. In this way, a leakage magnetic flux through the bridge portion 54b can be reduced. In this case, the radial position of the bridge portion 54b is not particularly limited.

Further, in the embodiment described above, at the joining portion between the output shaft portion 51 and the resin portion 56, the plurality of recessed portions 51a of the output shaft portion 51 and the plurality of protrusions 57 of the resin portion 56 are engaged with each other, so that mutual movement in the radial direction and the axial direction is suppressed.

However, with respect to the engagement aspect between the output shaft portion 51 and the resin portion 56 at the joining portion, any engagement aspect is acceptable as long as it has a shaped portion capable of suppressing mutual movement in the radial direction and the axial direction. For example, as shown in Fig. 8, a plurality of protrusions 51b may be provided on the outer peripheral surface of the output shaft portion 51, and a plurality of recessed portions 57a corresponding to the plurality of protrusions 51b may be molded in the resin portion 56. Alternatively, a shape is acceptable in which the output shaft portion 51 and the resin portion 56 are joined to each other in the axial direction, or a shape is acceptable in which the output shaft portion 51 and the resin portion 56 are joined to (come into contact with) each other in a tapered shape.

Further, in the embodiment described above, the outer pole magnet 12 is used as a stator, and output is taken out from the magnetic modulator 50 having the magnetic pole pieces 54a. However, a configuration is also acceptable in which the magnetic pole piece 54a is fixed, the outer pole magnet 12 is provided on a rotatable low-speed rotor, and output is extracted from the low-speed rotor.

Further, the present invention can be suitably applied to various general industrial machines due to the features such as high efficiency, minimal maintenance, quietness (low noise), and cleanliness (oil-free). In particular, it is highly useful for the following applications.
· Gear for robot joint: It has high safety or a compliance function due to a torque limit function using the magnetic modulation gear or low stiffness.
· Speed-up gear for power generation: Since it has a torque limit function, an unreasonable load is not applied even during a high load such as during strong wind in wind power generation. Usefulness of minimal maintenance is high.
· Vacuum apparatus (semiconductor manufacturing apparatus): With use in magnetic coupling applications, a deceleration function and a coupling function can be exhibited independently, and a deceleration gear can be unnecessary (or an input motor can be made smaller). Therefore, the apparatus can be made more compact.
· Food machinery: Usefulness is high in terms of hygiene management because of features such as greaseless (oil-free), no abrasion powder of a shaft seal (oil seal), easy disassembly of a shaft structure, and easy internal cleaning.
· Office/home equipment: A quiet indoor space can be secured because of a feature such as low vibration noise due to non-contact power transmission.

In addition, the details shown in the embodiment described above can be appropriately changed within a scope which does depart from the concept of the invention.

### Industrial Applicability

As described above, the present invention is useful for obtaining suitable output performance.

### Reference Signs List

1 magnetic modulation gear
12 outer pole magnet
40 input shaft
41a inner pole magnet
50 magnetic modulator
51 output shaft portion (shaft member)
51a recessed portion
52 cylindrical portion
54 magnetic pole piece member
54a magnetic pole piece
54b bridge portion (connection portion)
55 bearing support ring
56 resin portion
57 protrusion
Ax center axis

## Claims

1. A method for manufacturing a magnetic modulator that includes a magnetic pole piece member having a plurality of magnetic pole pieces arranged in a circumferential direction and a connection portion connecting adjacent magnetic pole pieces to each other in the circumferential direction, and a shaft member, the method comprising:
a first process of manufacturing the magnetic pole piece member by axially laminating electromagnetic steel sheets each having the plurality of magnetic pole pieces and the connection portions;
a second process of performing resin molding to integrate the magnetic pole piece member and the shaft member with resin; and
a third process of performing removal processing on at least one of an inner peripheral surface and an outer peripheral surface of the magnetic pole piece member.

2. The method for manufacturing a magnetic modulator according to claim 1,
wherein in the third process, at least one of the inner peripheral surface and the outer peripheral surface of the magnetic pole piece member is subjected to removal processing until at least one of circularity equal to or higher than a predetermined value and coaxiality with the shaft member equal to or higher than a predetermined value is obtained.

3. The method for manufacturing a magnetic modulator according to claim 1 or 2,
wherein in the third process, both the inner peripheral surface and the outer peripheral surface of the magnetic pole piece member are cut or polished.

4. The method for manufacturing a magnetic modulator according to any one of claims 1 to 3,
wherein in the second process,
the shaft member and the magnetic pole piece member are fixed by resin on one end side in an axial direction with respect to the magnetic pole piece member, and
a bearing support member and the magnetic pole piece member are fixed by resin on the other end side in the axial direction with respect to the magnetic pole piece member.

5. The method for manufacturing a magnetic modulator according to any one of claims 1 to 4,
wherein in the magnetic pole piece member, an inner peripheral surface of the magnetic pole piece and an inner peripheral surface of the connection portion are flush with each other.

6. The method for manufacturing a magnetic modulator according to any one of claims 1 to 5,
wherein in the third process, the connection portion is removed.

7. The method for manufacturing a magnetic modulator according to any one of claims 1 to 6,
wherein the magnetic pole piece member includes a recessed portion on a peripheral surface, and
in the second process, the recessed portion is filled with resin.

8. The method for manufacturing a magnetic modulator according to any one of claims 1 to 7,
wherein the shaft member includes a shaped portion that suppresses mutual movement in a radial direction and an axial direction, at a joining portion with the resin that is integrated in the second process.

9. A magnetic modulator comprising:
a magnetic pole piece member made by axially laminating electromagnetic steel sheets each having a plurality of magnetic pole pieces arranged in a circumferential direction and a connection portion connecting adjacent magnetic pole pieces to each other in the circumferential direction; and
a shaft member,
wherein at least one of an inner peripheral surface and an outer peripheral surface of the magnetic pole piece member has circularity of 10 um or less and coaxiality with the shaft member of 5 um or less.

10. A magnetic modulation gear comprising:
a magnetic modulator manufactured by the method for manufacturing a magnetic modulator according to any one of claims 1 to 8, or the magnetic modulator according to claim 9;
an input shaft having a plurality of inner pole magnets disposed on an inner diameter side of the magnetic pole piece member and arranged in a circumferential direction; and
a plurality of outer pole magnets disposed on an outer diameter side of the magnetic pole piece member and arranged in the circumferential direction.
